# EUROPÄISCHE PATENTSCHRIFT

(11) **EP 2 322 906 B1**
(45) Veröffentlichungstag und Bekanntmachung des Hinweises auf die Patenterteilung: **30.03.2016**
(21) Anmeldenummer: 09014106.0
(22) Anmeldetag: 11.11.2009
(51) Int. Cl.: G01L 9/00

(54) **Drucksensor**
Pressure sensor
Capteur de pression

(43) Veröffentlichungstag der Anmeldung: 18.05.2011
(73) Patentinhaber: Micronas GmbH, 79108 Freiburg (DE)
(72) Erfinder: Erdler, Gilbert, 76275 Ettlingen (DE)
(74) Vertreter: Koch Müller Patentanwaltsgesellschaft mbH

(56) Entgegenhaltungen:
- US-A- 3 956 938
- US-A1- 2007 125 178

## Beschreibung

Die Erfindung betrifft einen Drucksensor mit einem an einer Halterung bewegbar gelagerten Verdrängungselement, das durch Druckbeaufschlagung entgegen einer Rückstellkraft auslenkbar ist.

Ein derartiger Drucksensor ist aus DE 10 2007 033 040 A1 bekannt. Der Drucksensor hat eine Halterung, an der eine metallische Membran angeordnet ist, die an ihrem Rand mit der Halterung verbunden ist und einer vom Rand beabstandeten Stelle durch Druckbeaufschlagung quer zu ihrer Erstreckungsebene elastisch auslenkbar ist. Auf der Membran sind vier Halbleiterchips angeordnet, in deren Siliziumsubstrat zur Erfassung der Biegeverformung der Membran jeweils ein Dehnungsmessstreifen integriert ist. Die Dehnungsmessstreifen sind zu einer Wheatstone-Brücke miteinander verschaltet. Wenn auf die Membran ein Druck ausgeübt wird, ändert sich der elektrische Widerstand der Dehnungsmessstreifen. Der Drucksensor weist zwar eine relativ hohe Messempfindlichkeit auf, hat aber den Nachteil, dass die Messsignale der Dehnungsmessstreifen stark von der Temperatur abhängig sind. Der Drucksensor weist deshalb einen Temperatursensor zum Erfassen eines Temperaturmesssignals für die Membran auf Mit Hilfe des Temperaturmesssignals können die Messsignale der Dehnungsmessstreifen korrigiert werden. Dies erfordert jedoch einen entsprechenden schaltungstechnischen Aufwand.

Aus DE 698 10 445 T2 ist ferner ein Sitzbelegungssensor für einen Fahrzeugsitz bekannt. Der Sitzbelegungssensor weist einen an einer Halterung angeordneten Druckknopf auf, der durch das Gewicht einer auf dem Fahrzeugsitz sitzenden Person entgegen der Rückstellkraft einer Schraubenfeder aus einer Ruhelage relativ zu der Halterung auslenkbar ist. Mit dem Druckknopf ist ein Permanentmagnet verbunden, der sich beim Verstellen des Druckknopfs relativ zu der Halterung verschiebt. Zum Erfassen der Lage des Permanentmagnets ist im magnetischen Feld des Permanentmagneten an der Halterung ein Magnetfeldsensor angeordnet. Der Sitzbelegungssensor ist relativ aufwändig und teuer.

Aus der US 3 956 938 A und der US 2007 125178 A1 sind weitere Drucksensoren bekannt.

Es besteht deshalb die Aufgabe, einen Drucksensor zu schaffen, der kostengünstig herstellbar ist.

Diese Aufgabe wird gelöst durch einen Drucksensor mit einem an einer Halterung bewegbar gelagerten Verdrängungselement, das durch Druckbeaufschlagung entgegen einer Rückstellkraft auslenkbar ist, mit einem an der Halterung angeordneten ferromagnetischen Fluid, das mit dem Verdrängungselement derart gekoppelt ist, dass die Lage des Fluids von dem auf das Verdrängungselement einwirkenden Druck abhängig ist, wobei das Fluid permanentmagnetisch magnetisiert ist und/ oder der Drucksensor zum Erzeugen eines das Fluid durchsetzten Magnetfeldes einen Magnetfelderzeuger aufweist, und wobei zum Erfassen der Lage des Fluid ein Magnetfeldsensor an der Halterung angeordnet ist, wobei der mit dem Fluid in Kontakt stehende Oberflächenbereich für das Fluid benetzend und ein seitlich an diesen Oberflächenbereich angrenzender weiterer Oberflächenbereich der Halterung für das Fluid entnetzend ist und wobei das Verdrängungselement eine Membran ist und die Halterung einen Halbleiterchip umfasst, in den der Magnetfeldsensor integriert ist.

Das Fluid kann dann bei der Herstellung des Drucksensors auf einfache Weise in flüssiger oder fließfähiger Form auf die Halterung aufgebracht werden. Das in einer Ausgangslage befindliche Verdrängungselement taucht bei einer Druckerhöhung in das Fluid ein und verdrängt dieses seitlich, wodurch das Fluid seine geometrische Form verändert. Die Formänderung bewirkt eine Veränderung des magnetischen Feldes in der Umgebung des Fluids, die mit Hilfe des Magnetfeldsensors messbar ist. Wenn der auf das Verdrängungsielement ausgeübte Druck entfernt wird, wird das Verdrängungselement durch die Rückstellkraft in seine Ausgangslage zurück bewegt. Aufgrund der an der Oberfläche des Fluids wirkenden Oberflächenspannung nimmt das Fluid dann wieder seine ursprüngliche Lage ein. Zwischen dem Messsignal des Magnetfeldsensors und dem Druck besteht ein eindeutiger Zusammenhang, so dass der Druck aus dem Messsignal ermittelt werden kann, beispielsweise mit Hilfe einer gespeicherten Kennlinie, gespeicherter Kenngrößen und/oder einer entsprechenden Rechenvorschrift.

Bei einer bevorzugten Ausführungsform der Erfindung ist das Verdrängungselement eine Membran, wobei die Halterung einen der Membran zugewandten Oberflächenbereich aufweist, und wobei zwischen dem Oberflächenbereich und der Membran ein Aufnahmeraum für das Fluid gebildet ist, in dem das Fluid derart angeordnet ist, dass es mit dem Oberflächenbereich und der Membran in Kontakt steht. Wenn die Membran auf den Oberflächenbereich der Halterung zu bewegt wird, reduziert sich die Dicke der zwischen der Membran und dem Oberflächenbereich befindlichen Fluidschicht, wodurch das magnetische Feld in dem Oberflächenbereich abnimmt. Die Abschwächung des Magnetfelds ist im Wesentlichen proportional zu dem auf die Membran einwirkenden Druck. Dabei wird unter dem Begriff "Druck" die Differenz zwischen dem auf die dem Fluid abgewandte Oberfläche der Membran einwirkenden Absolutdruck und dem Absolutdruck verstanden, der auf die dem Fluid zugewandte Oberfläche der Membran einwirkt.

Vorteilhaft ist, wenn der Magnetfeldsensor unterhalb des Oberflächenbereichs in die Halterung integriert ist. Beim Auftreten einer Druckänderung an der Membran ändert sich dann der von dem Magnetfeldsensor gemessene magnetische Fluss.

Bei einer vorteilhaften Ausgestaltung der Erfindung umfasst die Halterung einen Halbleiterchip, in den der Magnetfeldsensor integriert ist, wobei über dem Magnetfeldsensor eine Abstandshalterschicht aus einem nicht ferromagnetischen Material auf dem Halbleiterchip angeordnet ist, die an ihrer dem Halbleiterchip abgewandten Seite den der Membran zugewandten Oberflächenbereich aufweist. Dabei wird durch die Abstandshalterschicht eine größere Sensitivität des Magnetfeldsensors ermöglicht.

Zweckmäßigerweise ist das Fluid in einer abgeschlossenen Fluidkammer angeordnet, wobei das Verdrängungselement eine Wandung der Fluidkammer bildet. Wenn der im Inneren der Fluidkammer herrschende Innendruck und der Außendruck, der auf die der Fluidkammer abgewandte Außenseite der Membran einwirkt, gleich groß sind, befindet sich die Membran in Ruhelage. Bei, einer Zunahme des Außendrucks wird die Membran zu dem Oberflächenbereich der Halterung hin ausgelenkt und das Volumen der Fluidkammer und die Schichtdicke des Fluids reduzieren sich. Bei einer Abnahme des Außendrucks wird die Membran vom Oberflächenbereich der Halterung weg ausgelenkt und das Volumen der Fluidkammer und die Schichtdicke des Fluids vergrößern sich.

Bei einer zweckmäßigen Ausführungsform der Erfindung ist die Fluidkammer seitlich durch Seitenbegrenzungswände begrenzt, die vorzugsweise monolithisch auf den Halbleiterchip aufgebracht sind, wobei die Membran auf die Seitenbegrenzungswände auflaminiert ist. Der Drucksensor ermöglicht dann sehr kompakte Abmessungen und ist noch kostengünstiger herstellbar.

Bei einer bevorzugten Ausgestaltung der Erfindung ist der mit dem Fluid in Kontakt stehende Oberflächenbereich für das Fuid benetzend und ein seitlich an diesen Oberflächenbereich angrenzender weiterer Oberflächenbereich der Halterung ist für das Fuid entnetzend. Das Fluid kehrt dann nach Entfernen eines auf die Membranaußenseite einwirkenden Drucks aufgrund der Oberflächenspannung leichter in seine Ausgangslage zurück.

Der Magnetsensor kann ein magnetoresistiver Sensor sein. Der Magnetfeldsensor kann aber auch ein Hall-Sensor sein. Die Hallplatte des Hall-Sensors ist vorzugsweise etwa parallel zur Ebene des Halbleiterchips angeordnet (horizontaler Hall-Sensor), wobei das Fluid etwa normal zur Ebene des Halbleiterchips magnetisiert ist. Wenn die Magnetisierung des Fluids eine parallel zur Ebene des Halbleiterchips verlaufende Komponente aufweist, kann der Magnetfeldsensor auch als vertikaler Hall-Sensor ausgestaltet sein.

Bei einer zweckmäßigen Ausgestaltung der Erfindung weist der Magnetfelderzeuger einen Permanentmagnet auf, der vorzugsweise quer Erstreckungsebene der Membran über oder unter dieser angeordnet ist. Das Fluid wird dann durch das Bias-Magnetfeld des Permanentmagneten dauerhaft in eine vorbestimmte Richtung magnetisiert.

Bei einer anderen vorteilhaften Ausführungsform der Erfindung weist der Magnetfelderzeuger eine Spule auf, insbesondere eine Helmholzspule, die vorzugsweise quer zur Erstreckungsebene der Membran über oder unter dieser angeordnet ist. Mit Hilfe der Spule kann das Fluid in bestimmten Zeitabständen und/oder in Abhängigkeit von dem auf den Magnetfeldsensor einwirkenden Druck initial magnetisiert werden. Selbstverständlich ist es aber auch möglich, die Spule ständig zu bestromen, um ein Bias-Magnetfeld zu erzeugen.

Nachfolgend ist ein Ausführungsbeispiel der Erfindung anhand der Zeichnung näher erläutert. Es zeigt:
- Fig. 1: einen Querschnitt durch einen ein Ferrofluid enthaltenden Drucksensor, der eine durch Druckbeaufschlagung auslenkbare Membran aufweist, wobei die Membran in der Ruhelage angeordnet ist,
- Fig. 2: eine Darstellung ähnlich Fig. 1, wobei jedoch die Membran durch einen Unterdruck in eine erste Arbeitslage ausgelenkt ist,
- Fig. 3: eine Darstellung ähnlich Fig. 1, wobei jedoch die Membran durch einen Überdruck in eine zweite Arbeitslage ausgelenkt ist, und
- Fig. 4: einen Querschnitt durch einen Drucksensor mit einem Backbias-Magneten.

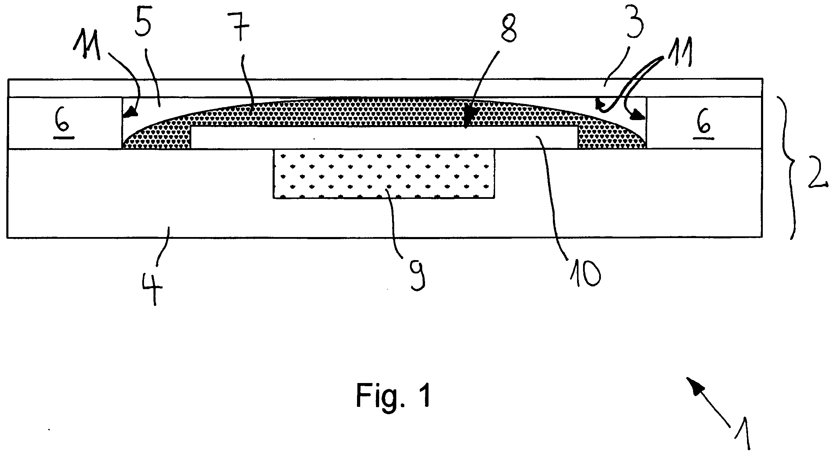

Ein in Fig. 1 im Ganzen mit 1 bezeichneter Drucksensor weist eine Halterung 2 auf, an der eine Membran 3 aufgespannt ist. Die Halterung hat einen Halbleiterchip 4, auf dessen der Membran 3 zugewandte Oberfläche eine Rahmenstruktur aufgebracht ist, die Seitenbegrenzungswände 6 aufweist, welche eine Fluidkammer 5 unterbrechungsfrei umgrenzen.

Die Seitenbegrenzungswände 6 sind an ihrem Fußende dicht mit dem Halbleiterchip 4 verbunden. An ihrem gegenüberliegenden anderen Ende sind die Seitenbegrenzungswände 6 dicht mit einem Randbereich der die Fluidkammer 5 überspannenden Membran 3 verbunden. Die Fluidkammer 5 ist also durch den Halbleiterchip 4, die Seitenbegrenzungswände 6 und die Membran 3 gegen die Umgebung des Drucksensors abgedichtet. In einer Ruhelage ist die Membran 3 etwa parallel zur Erstreckungsebene des Halbleiterchips 4 angeordnet.

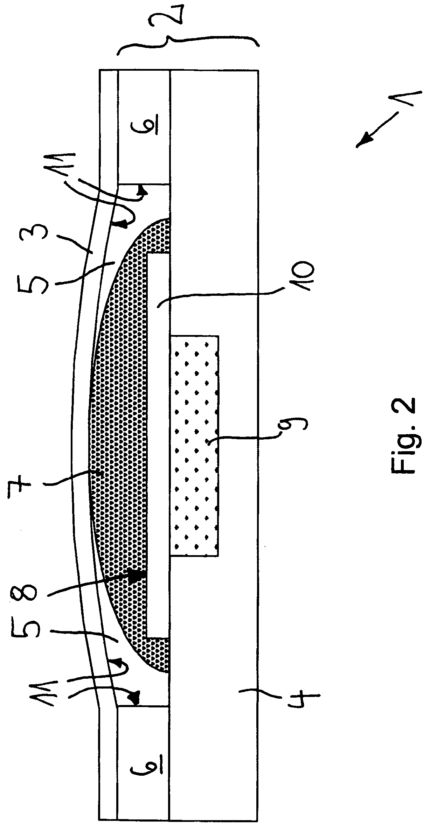

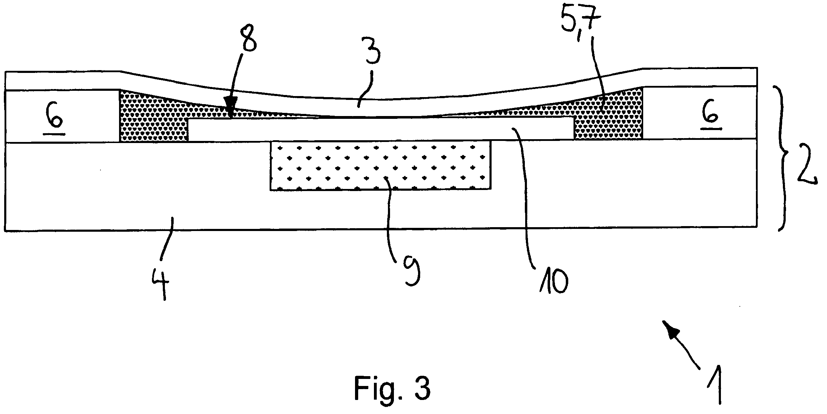

Wie in Fig. 2 erkennbar ist, kann ein von den Seitenbegrenzungswänden 6 beabstandeter Bereich der Membran 3 durch einen Unterdruck in der Umgebung des Drucksensors 1 entgegen der Rückstellkraft des elastischen Membranwerkstoffs quer zur Erstreckungsebene des Halbleiterchips 4 aus einer Ruhelage von dem Halbleiterchip 4 weg ausgelenkt werden. In entsprechender Weise kann der von den Seitenbegrenzungswänden 6 beabstandete Bereich der Membran 3 durch einen Überdruck in der Umgebung des Drucksensors 1 aus der Ruhelage auf den Halbleiterchip 4 zu ausgelenkt werden (Fig. 3).

Ein Teil der Fluidkammer 5 ist mit einem ferromagnetisches Fluid 7 befüllt, das in einer etwa normal zur Erstreckungsebene des Halbleiterchips 4 verlaufenden Richtung permanent magnetisiert ist. Bei der Herstellung des Drucksensors kann dies dadurch erreicht werden, dass zunächst die Halterung 2 bereitgestellt wird, dann das Fluid 7 in die Fluidkammer 5 eingefüllt wird und danach in dem Fluid enthaltene ferromagnetische Partikel in einem starken Magnetfeld quer zur Erstreckungsebene des Halbleiterchips 4 ausgerichtet werden. Der verbleibende Teil der Fluidkammer 5 ist mit einem Gas befüllt.

In Fig. 1 bis 3 ist erkennbar, dass unabhängig von der Auslenkung der Membran 3 das Fluid jeweils sowohl mit der Innenfläche der Membran 3 als auch mit einem dieser gegenüberliegenden Oberflächenbereich 8 der Halterung in Kontakt steht. Die Lage des Fluids 7 ist von dem auf die Membran 3 einwirkenden Druck in der Umgebung des Drucksensors 1 abhängig. Beim Auftreten eines Unterdrucks in der Umgebung des Drucksensors 1 fließt das Fluid zu der am weitesten ausgelenkten Stelle der Membran 3 bzw. zur Mitte der Fluidkammer 5 hin (Fig. 2). Beim Auftreten eines Überdrucks in der Umgebung des Drucksensors 1 wird das Fluid verdrängt und fließt zum Rand der Fluidkammer hin (Fig. 3).

Zum Erfassen der Lage des Fluids 7 ist unterhalb des Oberflächenbereichs 8 ein Magnetfeldsensor 9 in den Halbleiterchip 4 integriert. Der Magnetfeldsensor 9 wird von einem vom Fluid 7 erzeugten magnetischen Fluss durchflutet. Der Magnetfeldsensor 9 ist als Hall-Sensor ausgestaltet, der eine etwa parallel zur Erstreckungsebene des Halbleiterchips 4 angeordnete, in der Zeichnung nicht näher dargestellte Hall-Platte aufweist.

Bei einer Abnahme des Drucks in der Umgebung des Drucksensors 1 nimmt die Schichtdicke der auf dem Magnetfeldsensor 9 befindlischen Fluid-Schicht zu (Fig. 1 und 2). Dadurch erhöht sich die magnetische Flussdichte in dem Magnetfeldsensor 9 entsprechend. Bei einer Zunahme des Drucks in der Umgebung des Drucksensors 1 nimmt die Schichtdicke der auf dem Magnetfeldsensor 9 befindlichen FluidSchicht ab (Fig. 1 und 3). Dadurch reduziert sich die magnetische Flussdichte in dem Magnetfeldsensor 9 entsprechend. Die Änderung der magnetischen Flussdichte ist etwa proportional zur Druckänderung in der Umgebung des Drucksensors 1. Das Messsignal des Magnetfeldsensors 9 ist also ein Maß für den Druck in der Umgebung des Drucksensors 1.

Auf den Magnetfeldsensor 9 ist eine Abstandshalterschicht 10 aufgebracht, die aus einem nicht ferromagnetischen Material besteht. Der das Fluid 7 aufnehmende Oberflächenbereich der Halterung 2 ist auf der Abstandshalterschicht 10 angeordnet. Wie in Fig. 1 bis 3 erkennbar ist, überdeckt die Abstandshalterschicht 10 den Magnetfeldsensor 9 vollständig und steht seitlich über diesen über. Dadurch ist das Fluid 7 von dem Magnetfeldsensor 9 beabstandet.

Erwähnt werden soll noch, dass der Oberflächenbereich 8 für das Fuid benetzend ist und dass ein seitlich an diesen Oberflächenbereich 8 angrenzender weiterer Oberflächenbereich 11 der Halterung für das Fuid entnetzend ist. Dadurch tritt an der freien Oberfläche des Fluids 7 eine Oberflächenspannung auf, die das Fluid 7 zusammenhält und die dafür sorgt, dass das Fluid 7 bei eine Abnahme des Drucks in der Umgebung des Drucksensors 1 zur Mitte der Fluidkammer 5 fließt.

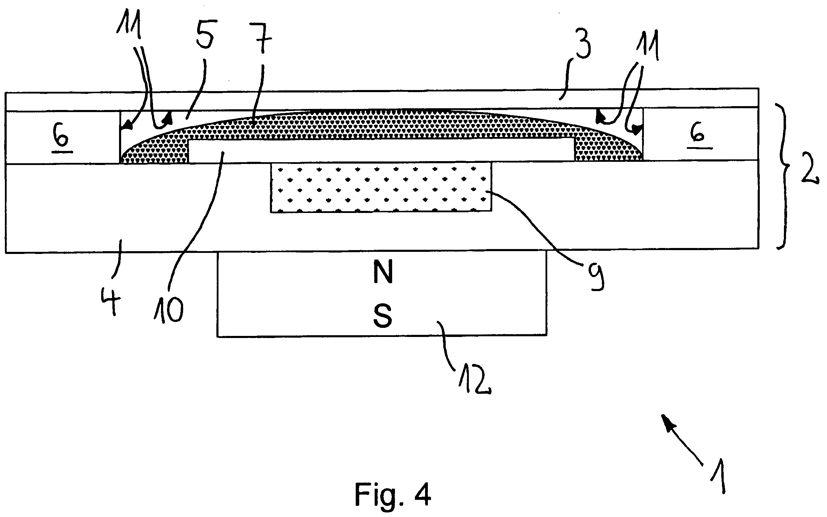

Bei dem in Fig. 4 gezeigten Ausführungsbeispiel ist unter dem Magnetfeldsensor 9 an der Rückseite des Halbleiterchips 4 ein Permanentmagnet 12 angeordnet, der als Backbias-Magnet dient, dessen magnetischer Fluss den Magnetfeldsensor 9 und das Fluid 7 durchsetzt.

## Patentansprüche

1. Drucksensor (1) mit einem an einer Halterung (2) bewegbar gelagerten Verdrängungselement, das durch Druckbeaufschlagung entgegen einer Rückstellkraft auslenkbar ist, mit ein auf einem Oberflächenbereich (8) an der Halterung (2) angeordneten ferromagnetischen Fluid (7), das mit dem Verdrängungselement derart gekoppelt ist, dass die Lage des Fluids (7) von dem auf das Verdrängungselement einwirkenden Druck abhängig ist, wobei das Fluid (7) permanentmagnetisch magnetisiert ist und/ oder der Drucksensor (1) zum Erzeugen eines das Fluid (7) durchsetzenden Magnetfelds einen Magnetfelderzeuger aufweist, und wobei zum Erfassen der Lage des Fluids (7) ein Magnetfeldsensor (9) an der Halterung (2) angeordnet ist, **dadurch gekennzeichnet, dass**
der mit dem Fluid (7) in Kontakt stehende Oberflächenbereich (8) für das Fluid (7) benetzend und ein seitlich an diesen Oberflächenbereich (8) angrenzender weiterer Oberflächenbereich (11) der Halterung (2) für das Fluid (7) entnetzend ist und wobei das Verdrängungselement eine Membran (3) ist und die Halterung (2) einen Halbleiterchip (4) umfasst, in den der Magnetfeldsensor (9) integriert ist.

2. Drucksensor (1) nach Anspruch 1, wobei die Halterung (2) einen der Membran (3) zugewandten Oberflächenbereich (8) aufweist, und wobei zwischen dem Oberflächenbereich (8) und dem Membran (3) ein Aufnahmeraum für das Fluid (7) gebildet ist, in dem das Fluid (7) derart angeordnet ist, dass es mit dem Oberflächenbereich (8) und der Membran (3) in Kontakt steht.

3. Drucksensor (1) nach Anspruch 2, wobei der Magnetfeldsensor (9) unterhalb des Oberflächenbereichs (8) in der Halterung (2) integriert ist.

4. Drucksensor nach einem der Ansprüche 2 oder 3, wobei über dem Magnetfeldsensor (9) eine Abstandshalterschicht (10) aus einem nicht ferromagnetischen Material auf dem Halbleiterchip (4) angeordnet ist, die an ihrer dem Halbleiterchip (4) abgewandten Seite den der Membran (3) zugewandten Oberflächenbereich (8) aufweist.

5. Drucksensor (1) nach einem der Ansprüche 1 bis 4, wobei das Fluid (7) in einer abgeschlossenen Fluidkammer (5) angeordnet ist, und wobei das Verdrängungselement eine Wandung der Fluidkammer (5) bildet.

6. Drucksensor (1) nach einem der Ansprüche 1 bis 5, wobei die Fluidkammer (5) seitlich durch Seitenbegrenzungswände (6) begrenzt sind, die vorzugsweise monolithisch auf den Halbleiterchip (4) aufgebracht sind, und wobei die Membran (3) auf die Seitenbegrenzungswände (6) auflaminiert ist.

7. Drucksensor (1) nach einem der Ansprüche 1 bis 6, wobei der Magnetfeldsensor ein magnetoresistiver Sensor ist.

8. Drucksensor nach einem der Ansprüche 1 bis 7, wobei der Magnetfeldsensor (9) ein Hall-Sensor ist.

9. Drucksensor (1) nach einem der Ansprüche 1 bis 8, wobei der Magnetfelderzeuger einen Permanentmagnet (12) aufweist, der vorzugsweise quer Erstreckungsebene der Membran (3) über oder unter dieser angeordnet ist.

10. Drucksensor (1) nach einem der Ansprüche 1 bis 9, wobei der Magnetfelderzeuger eine Spule aufweist, insbesondere eine Helmholzspule, die vorzugsweise quer zur Erstreckungsebene der Membran (3) über oder unter dieser angeordnet ist.

## Claims

1. Pressure sensor (1) with displacing element, which is movably mounted on a mount (2) and which is deflectable against a restoring force by pressure loadING, with a ferromagnetic fluid (7), which is arranged on a surface region (8) at the mount (2) and which is so coupled with the displacing element that the position of the fluid (7) is dependent on the pressure acting on the displacing element, wherein the fluid (7) is magnetised to be permanently magnetic and/or the pressure sensor (1) comprises a magnetic field generator for generating a magnetic field penetrating the fluid (7) and wherein for detection of the position of the fluid (7) a magnetic field sensor (9) is arranged at the mount (2), **characterised in that** the surface region (8), which is in contact with the fluid (7), is wettable for the fluid (7) and a further surface region (11), which laterally adjoins this surface region (8), of the mount (2) is non-wettable for the fluid (7) and wherein the displacing element is a diaphragm (3) and the mount (2) comprises a semiconductor chip (4) in which the magnetic field sensor (9) is integrated.

2. Pressure sensor (1) according to claim 1, wherein the mount (2) has a surface region (8) facing the diaphragm (3) and wherein a receiving space for the fluid (7) is formed between the surface region (8) and the diaphragm (3), in which space the fluid (7) is so arranged that it is in contact with the surface region (8) and the diaphragm (3).

3. Pressure sensor (1) according to claim 2, wherein the magnetic field sensor (9) is integrated in the mount (2) below the surface region (8).

4. Pressure sensor according to one of claims 2 and 3, wherein a spacer layer (10) of a non-ferromagnetic material is arranged above the magnetic field sensor (9) and on the semiconductor chip (4), the layer having at its side remote from the semiconductor chip (4) the surface region (8) facing the diaphragm (3).

5. Pressure sensor (1) according to any one of claims 1 to 4, wherein the fluid (7) is arranged in a closed fluid chamber (5) and wherein the displacing element forms a wall of the fluid chamber (5).

6. Pressure sensor (1) according to any one of claims 1 to 5, wherein the fluid chamber (5) is laterally bounded by lateral boundary walls (6), which are preferably monolithically formed on the semiconductor chip (4), and wherein the diaphragm (3) is laminated onto the lateral boundary walls (6).

7. Pressure sensor (1) according to any one of claims 1 to 6, wherein the magnetic field sensor is a magnetoresistive sensor.

8. Pressure sensor according to any one of claims 1 to 7, wherein the magnetic field sensor is a Hall sensor.

9. Pressure sensor (1) according to any one of claims 1 to 8, wherein the magnetic field generator comprises a permanent magnet (12), which is preferably arranged transversely to the plane of the principal dimension of the diaphragm (3) thereabove or therebelow.

10. Pressure sensor (1) according to any one of claims 1 to 9, wherein the magnetic field generator comprises a coil, particularly a Helmholtz coil, which is preferably arranged transversely to the plane of the principal dimension of the diaphragm (3) thereabove or therebelow.

## Revendications

1. Capteur de pression (1) avec un élément de déplacement monté de façon déplaçable sur un support (2), qui peut être déplacé par l'action d'une pression contre une force de rappel, avec un fluide ferromagnétique (7) disposé sur une zone de surface (8) sur le support (2) et qui est couplé avec l'élément de déplacement de telle manière que la position du fluide (7) dépende de la pression agissant sur l'élément de déplacement, dans lequel le fluide (7) est magnétisé en aimantation permanente et/ou le capteur de pression (1) présente un générateur de champ magnétique pour la production d'un champ magnétique traversant le fluide (7) et dans lequel un détecteur de champ magnétique (9) est disposé sur le support (2) pour détecter la position du fluide (7), **caractérisé en ce que** la zone de surface (8) se trouvant en contact avec le fluide (7) est mouillante pour le fluide (7) et une autre zone de surface (11) du support (2) adjacente latéralement à cette zone de surface (8) n'est pas mouillante pour le fluide (7) et dans lequel l'élément de déplacement est une membrane (3) et le support (2) comprend une puce à semi-conducteur (4) dans laquelle le détecteur de champ magnétique (9) est intégré.

2. Capteur de pression (1) selon la revendication 1, dans lequel le support (2) présente une zone de surface (8) tournée vers la membrane (3) et dans lequel est formée entre la zone de surface (8) et la membrane (3) une chambre de réception pour le fluide (7) dans laquelle le fluide (7) est disposé de telle manière qu'il se trouve en contact avec la zone de surface (8) et la membrane (3).

3. Capteur de pression (1) selon la revendication 2, dans lequel le détecteur de champ magnétique (9) est intégré en dessous de la zone de surface (8) dans le support (2).

4. Capteur de pression (1) selon l'une des revendications 2 ou 3, dans lequel une couche d'écartement (10) en un matériau non ferromagnétique est disposée sur la puce à semi-conducteur (4) au-dessus du détecteur de champ magnétique (9), la couche présentant sur son côté situé à l'opposé de la puce à semi-conducteur (4) la zone de surface (8) tournée vers la membrane (3).

5. Capteur de pression (1) selon l'une quelconque des revendications 1 à 4, dans lequel le fluide (7) est disposé dans une chambre de fluide fermée (5) et dans lequel l'élément de déplacement forme une paroi de la chambre de fluide (5).

6. Capteur de pression (1) selon l'une quelconque des revendications 1 à 5, dans lequel la chambre de fluide (5) est limitée latéralement par des parois de limitation latérales (6), qui sont de préférence déposées sous forme monolithique sur la puce à semi-conducteur (4) et dans lequel la membrane (3) est contrecollée sur les parois de limitation latérales (6).

7. Capteur de pression (1) selon l'une quelconque des revendications 1 à 6, dans lequel le détecteur de champ magnétique est un détecteur magnéto-résistif.

8. Capteur de pression (1) selon l'une quelconque des revendications 1 à 7, dans lequel le détecteur de champ magnétique (9) est un capteur à effet Hall.

9. Capteur de pression (1) selon l'une quelconque des revendications 1 à 8, dans lequel le générateur de champ magnétique présente un aimant permanent (12), qui est disposé de préférence transversalement au plan d'extension de la membrane (3) au-dessus ou en dessous de celle-ci.

10. Capteur de pression (1) selon l'une quelconque des revendications 1 à 9, dans lequel le générateur de champ magnétique présente une bobine, en particulier une bobine de Helmholz, qui est disposée de préférence transversalement au plan d'extension de la membrane (3) au-dessus ou en dessous de celle-ci.
